(19) **Europäisches Patentamt**
**European Patent Office**
**Office européen des brevets**

(11) **EP 3 573 339 A1**

(12) **EUROPEAN PATENT APPLICATION**
published in accordance with Art. 153(4) EPC

(43) Date of publication:
**27.11.2019 Bulletin 2019/48**

(21) Application number: **17892157.3**

(22) Date of filing: **19.01.2017**

(51) Int Cl.:
*H04N 21/2662* (2011.01)   *G06F 13/00* (2006.01)
*H04N 21/4728* (2011.01)

(86) International application number:
**PCT/JP2017/001753**

(87) International publication number:
**WO 2018/134947 (26.07.2018 Gazette 2018/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Sony Interactive Entertainment Inc.
Tokyo 108-0075 (JP)**

(72) Inventor: **OTO, Tomohiro
Tokyo 108-0075 (JP)**

(74) Representative: **D Young & Co LLP
120 Holborn
London EC1N 2DY (GB)**

(54) **IMAGE DELIVERY DEVICE**

(57)    Provided is an image delivery apparatus configured to deliver a moving image that is a display object to an image display control apparatus configured to display a moving image to present the moving image to a user. The image delivery apparatus delivers, to the image display control apparatus at one time, any one of a plurality of moving images different from each other in portion displayable at high resolution in a displayable range, and acquires information regarding a watching direction of the user in the displayable range, to thereby select a moving image of the plurality of moving images as a delivery target based on the information regarding the watching direction.

F I G . 1 0

**Description**

[Technical Field]

The present invention relates to an image delivery apparatus, an image delivery method, and a program for delivering a moving image.

[Background Art]

Hitherto, there has been known a technology that delivers moving images in real time via a communication network to allow users to view the moving images.

[Summary]

[Technical Problem]

With the above-mentioned technology in the related art, it is difficult to deliver high-resolution moving images if a communication network does not have sufficient bandwidth.
The present invention has been made in view of the circumstance described above, and has an object to provide an image delivery apparatus, an image delivery method, and a program capable of reducing required communication bandwidth while achieving relatively high-resolution display in a direction that a user watches.

[Solution to Problem]

An image delivery apparatus according to the present invention is an image delivery apparatus configured to deliver a moving image that is a display object to an image display control apparatus configured to display a moving image to present the moving image to a user, the image delivery apparatus including: a delivery unit configured to deliver, to the image display control apparatus at one time, any one of a plurality of moving images different from each other in portion displayable at high resolution in a displayable range; and a watching direction acquisition unit configured to acquire information regarding a watching direction of the user in the displayable range. The delivery unit selects a moving image of the plurality of moving images as a delivery target based on the information regarding the watching direction.
An image delivery method according to the present invention is an image delivery method for delivering a moving image that is a display object to an image display control apparatus configured to display a moving image to present the moving image to a user, the image delivery method including: a delivery step of delivering, to the image display control apparatus at one time, any one of a plurality of moving images different from each other in portion displayable at high resolution in a displayable range; and a watching direction acquisition step of acquiring information regarding a watching direction of the user in the displayable range. In the delivery step, a moving image of the plurality of moving images is selected as a delivery target based on the information regarding the watching direction.
A program according to the present invention is a program for controlling an image delivery apparatus configured to deliver a moving image that is a display object to an image display control apparatus configured to display a moving image to present the moving image to a user, the program controlling the image delivery apparatus to function as: a delivery unit configured to deliver, to the image display control apparatus at one time, any one of a plurality of moving images different from each other in portion displayable at high resolution in a displayable range; and a watching direction acquisition unit configured to acquire information regarding a watching direction of the user in the displayable range. The delivery unit selects a moving image of the plurality of moving images as a delivery target based on the information regarding the watching direction. This program may be stored in a non-transitory computer readable information storage medium to be provided.

[Brief Description of Drawings]

[FIG. 1] FIG. 1 is a diagram illustrating a virtual sphere corresponding to a whole-sky scene.
[FIG. 2] FIG. 2 is a diagram illustrating an example of a projection surface on which a scene of a 1/4 spherical surface is projected.
[FIG. 3] FIG. 3 is a diagram illustrating an example of a trunk line of the projection surface.
[FIG. 4] FIG. 4 is a diagram illustrating an example of a branch line of the projection surface.
[FIG. 5] FIG. 5 is a diagram illustrating part of a panoramic image obtained through conversion of the scene projected on the projection surface in FIG. 2.

[FIG. 6] FIG. 6 is a diagram illustrating an example of the panoramic image.

[FIG. 7] FIG. 7 is a diagram illustrating another example of the projection surface.

[FIG. 8] FIG. 8 is a configuration block diagram illustrating the configuration of an image display system.

[FIG. 9] FIG. 9 is a functional block diagram illustrating the functions of the image display system.

[FIG. 10] FIG. 10 is a diagram illustrating an example of a delivery target moving image in a case where a moving image that is a delivery target is switched.

[Description of Embodiment]

Now, an embodiment of the present invention is described in detail with reference to the drawings.

[Image format of panoramic image]

An image generation apparatus according to the present embodiment generates a panoramic image including a scene of the entire or part of the range of the whole sky seen from an observation point. The panoramic image that is generated by the image generation apparatus according to the present embodiment is hereinafter referred to as "panoramic image I." The panoramic image I corresponds to two-dimensional (plane) image data including the scene of the entire or part of the range of the whole sky. Here, the whole sky means all the directions from the observation point, that is, 360° in the horizontal direction (left and right direction) and 180° in the vertical direction (up and down direction) from the zenith to the nadir.

Now, a specific example of the image format of the panoramic image I of the present embodiment is described. The whole-sky scene seen from the observation point is displayed on a virtual spherical surface with the position of the observation point being the center. Here, the virtual sphere corresponding to the whole-sky scene is referred to as "virtual sphere S." In the following, a coordinate system is used for description, the coordinate system including three axes of an x axis, a y axis, and a z axis that are orthogonal to each other with a center point O of the virtual sphere S corresponding to the observation point being the origin. The x axis and the z axis are taken on the horizontal plane while the y axis is taken in the vertical direction.

In the present embodiment, a direction seen from the observation point in the whole sky is set as a particularly important direction. This important direction is hereinafter referred to as "attention direction." Here, the attention direction is set to an x-axis positive direction. The attention direction is a direction to which the user is supposed to particularly pay attention or a direction to which a person who has generated the panoramic image I wants the user to particularly pay attention. The attention direction may be, for example, a direction in which an important object is displayed. In the present embodiment, the panoramic image I is generated such that a region closer to the attention direction is displayed at higher quality (higher resolution) on the virtual sphere S.

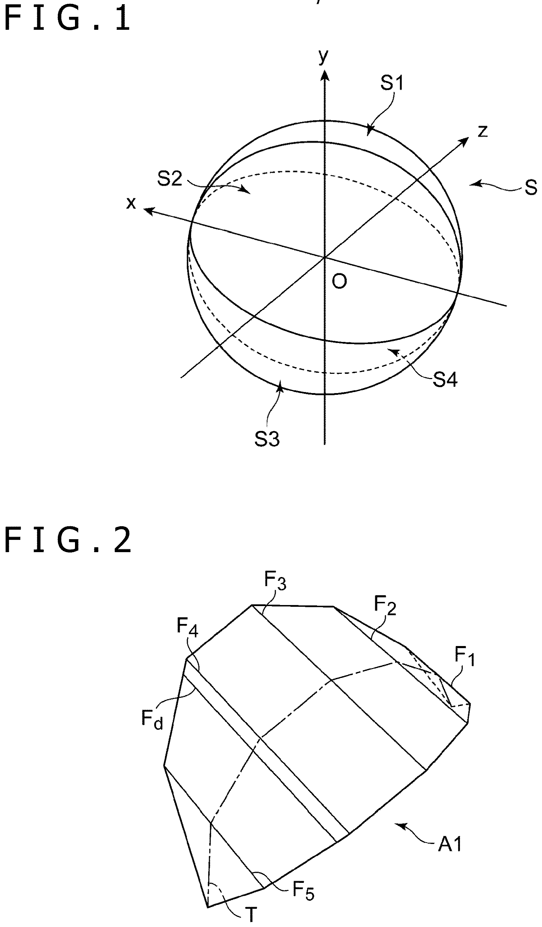

The virtual sphere S is divided into four sections by two planes that pass through the center point O and are parallel to the attention direction and orthogonal to each other, so that four 1/4 spherical surfaces S1 to S4 are obtained as illustrated in FIG. 1. In FIG. 1, the virtual sphere S is divided into the four sections by two planes of an xy plane (vertical plane) and an xz plane (horizontal plane). The four 1/4 spherical surfaces each have a shape that passes through the center point O and is symmetrical with respect to one plane parallel to the attention direction. Specifically, the 1/4 spherical surface S1 and the 1/4 spherical surface S3 each have a shape symmetrical with respect to a plane represented by y = z. Meanwhile, the 1/4 spherical surface S2 and the 1/4 spherical surface S4 each have a shape symmetrical with respect to a plane represented by y = -z.

In the following, with the 1/4 spherical surface S1 of the four 1/4 spherical surfaces taken as an example, a method of generating part of the panoramic image I that includes a scene corresponding to the 1/4 spherical surface S1 is described. The scene in the range corresponding to the 1/4 spherical surface S1 is projected on a projection surface A1 including a plurality of polygons (triangles and rectangles) connected to each other. FIG. 2 is a perspective diagram illustrating a specific example of the projection surface A1. A center line along the attention direction of the projection surface A1 is hereinafter referred to as "trunk line T." As described above, the 1/4 spherical surface S1 has the shape symmetrical with respect to the plane represented by y = z, and hence the trunk line T is also placed on this plane. The plane on which the trunk line T is placed (here, the plane represented by y = z) is hereinafter referred to as "center plane." The trunk line T represents a shape obtained by cutting the projection surface A1 at the center plane.

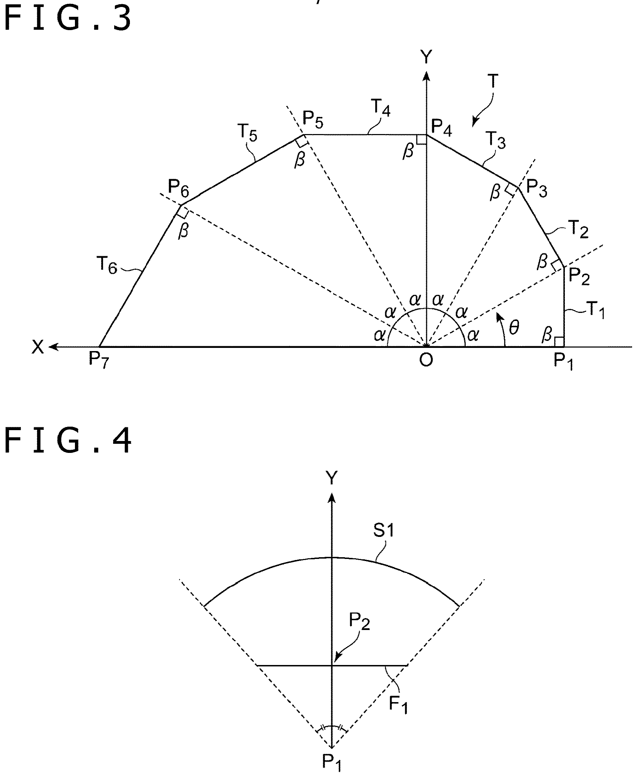

FIG. 3 illustrates a specific example of the shape of the trunk line T in the center plane. Note that, as an example, the projection surface A1 here includes six polygons connected to each other. Accordingly, the trunk line T includes six line segments as illustrated in FIG. 3. Further, in the following, positions in the center plane are represented by a two-dimensional coordinate system including an X axis and a Y axis orthogonal to each other. Here, the X axis matches the x axis in the three-dimensional space, but the Y axis is tilted toward the z axis from the y axis by 45°.

Now, a method of determining the shape of the trunk line T is described. Here, the six line segments of the trunk line T are denoted by $T_1$, $T_2$, $T_3$, $T_4$, $T_5$, and $T_6$ in order from a side opposite to the attention direction. Further, the end point on the direction side opposite to the attention direction (X-axis negative direction) of the trunk line T is referred to as "starting point $P_1$," and the end points of the respective line segments are referred to as "relay points $P_2$, $P_3$, $P_4$, $P_5$, and $P_6$" in order from the side closer to the starting point $P_1$. In addition, the end point on the attention direction (X-axis positive direction) side of the trunk line T is referred to as "end point $P_7$."

The relay points $P_2$ to $P_6$ are placed such that angles formed by the respective line segments $T_1$ to $T_6$ with the center point O (that is, angles formed by both of the ends of the respective line segments and the center point O) are equal to each other. Specifically, in a case where five auxiliary lines are drawn to evenly divide an angle $P_1OP_7$ (= 180°) into six, the relay points $P_2$ to $P_6$ are placed on these auxiliary lines. In short, an angle $P_1OP_2$, an angle $P_2OP_3$, an angle $P_3OP_4$, an angle $P_4OP_5$, an angle $P_5OP_6$, and an angle $P_6OP_7$ are equal to each other, and are all 30° (= 180°/6). In the following, this angle (the angle formed by each line segment with the center point O) is referred to as "corresponding angle $\alpha$." The line segments $T_1$ to $T_6$ each cover a range at the corresponding angle $\alpha$ when seen from the center point O.

The starting point $P_1$ is set to a position away from the center point O by a predetermined distance on the direction side opposite to the attention direction (X-axis negative direction). Here, the starting point $P_1$ is at a position coordinate of (X = -1, Y = 0). In addition, the relay point $P_2$ is set to a position at which a straight line that passes through the starting point $P_1$ and is vertical to a straight line $OP_1$, and an auxiliary line closest to the starting point $P_1$ intersect with each other. That is, the position of the relay point $P_2$ is determined such that the angle $P_1OP_2$ satisfies $\alpha$ = 30° and an angle $OP_1P_2$ is 90°. The angle $OP_1P_2$ here is referred to as "exit angle $\beta$." In addition, the relay point $P_3$ is determined such that the angle $P_2OP_3$ is 30° and an angle $OP_2P_3$ is 90°. The remaining relay points $P_4$ to $P_6$ and the end point $P_7$ are sequentially determined such that an angle $P_{n-1}OP_n$ (corresponding angle $\alpha$) is 30° and an angle $OP_{n-1}P_n$ (exit angle $\beta$) is 90°.

With the starting point $P_1$, the relay points $P_2$ to $P_6$, and the end point $P_7$ at the positions determined in this way, the shape of the trunk line T in the center plane is determined. Here, the line segments $T_1$ to $T_6$ have lengths different from each other. Further, the line segment closer to the attention direction is longer, and the line segment closer to the direction opposite to the attention direction is shorter. This means that the trunk line T has a shape that is asymmetrical with respect to a plane passing through the center point O and being vertical to the attention direction, and has long portions on the attention direction side compared to the opposite side.

Now, it is considered to represent the position coordinates in the center plane by polar coordinates (r, $\theta$). At this time, the shape of the trunk line T is represented by r = f($\theta$) that is a single-valued function in the polar coordinate system. Here, r indicates distance to the center point O, and $\theta$ indicates an angle value with the X-axis negative direction being 0° and a counterclockwise direction being the positive direction, and takes a value of 0° or larger and 180° or smaller. When the trunk line T determined by the method described above is expressed by a function f, the function f is a monotonically increasing function in which r is increased as $\theta$ is increased. With this, the trunk line T per unit of angle can be longer toward the attention direction.

The shape of the trunk line T is determined, and five branch lines $F_1$ to $F_5$ are next placed so as to pass through the respective relay points $P_2$ to $P_6$. The branch lines F correspond to ribs in a case where the trunk line T is regarded as a spine, and are placed so as to extend to both lateral sides when seen from the extension direction of the trunk line T. Specifically, here, the branch lines $F_1$ to $F_5$ are placed along a direction orthogonal to the center plane. Further, the branch lines $F_1$ to $F_5$ are each placed such that the middle point of the branch line matches the relay point on the trunk line T. Each of the branch lines F has a length that is determined to correspond to the 1/4 spherical surface S1.

By taking the branch line $F_1$ as an example, the placement of the branch line $F_1$ is specifically described. FIG. 4 illustrates a look in the plane that includes the relay point $P_2$ and the branch line $F_1$ and is vertical to the x axis. When the 1/4 spherical surface S1 is cut by a plane that passes through the relay point $P_2$ and is orthogonal to the attention direction, a fan shape with a central angle of 90° is obtained. Thus, the length of the branch line $F_1$ is determined such that an angle formed by both ends of the branch line $F_1$ and a point on the x axis is 90° as illustrated in FIG. 4. Here, the length of the branch line $F_1$ is twice as large as a distance from the relay point $P_2$ to the x axis. Note that, the middle point of the branch line $F_1$ matches the relay point $P_2$, and hence the branch line $F_1$ is symmetrical with respect to the center plane. Similar to the branch line $F_1$, the length of each of the branch lines $F_2$ to $F_5$ is determined so as to be twice as large as a distance from the corresponding relay point to the x axis.

The positions of the trunk line T and the branch lines $F_1$ to $F_5$ are determined in this way, and the entire shape of the projection surface A1 is thus determined. Specifically, the projection surface A1 has a shape obtained by connecting the starting point $P_1$ and the end point $P_7$ of the trunk line T and both ends of each of the branch lines F. A scene of the 1/4 spherical surface S1 is projected on the projection surface A1. Each of the branch lines $F_1$ to $F_5$ is symmetrical with respect to the center plane, and hence the entire of the projection surface A1 is symmetrical with respect to the center plane similar to the 1/4 spherical surface S1. Note that, on the projection surface A1, a branch line $F_d$ is set in addition to the branch lines $F_1$ to $F_5$. The branch line $F_d$ is a line segment on the projection surface A1 that is parallel to the other branch lines $F_1$ to $F_5$. A method of determining the position of the branch line $F_d$ is described later.

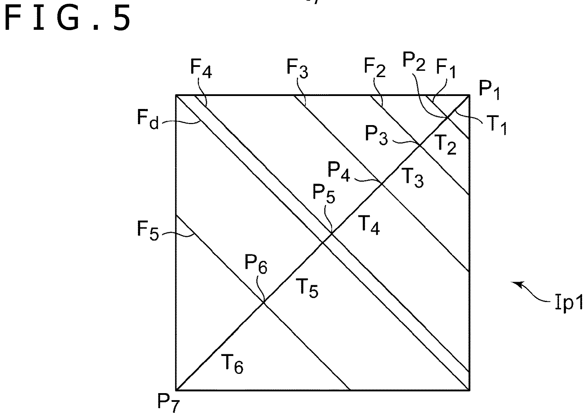

The scene projected on the projection surface A1 is converted to a planar shape, thereby forming part of the panoramic image I. A region in the panoramic image I that corresponds to the projection surface A1 is hereinafter referred to as "image portion Ip1." In the present embodiment, the image portion Ip1 has a square shape. FIG. 5 illustrates the image portion Ip1. FIG. 5 illustrates line segments corresponding to the trunk line T and the branch lines $F_1$ to $F_5$ in the projection surface A1.

As illustrated in FIG. 5, the trunk line T is associated with one diagonal of the image portion Ip1. Here, the upper-right vertex of the image portion Ip1 corresponds to the starting point $P_1$, and the lower-left vertex thereof corresponds to the end point $P_7$. This diagonal, which is denoted by $P_1P_7$, is divided into six and the six sections are associated with the respective line segments $T_1$ to $T_6$ of the trunk line T. The lengths of the line segments in the image portion Ip1 are determined depending on the lengths of the respective line segments $T_1$ to $T_6$ in the projection surface A1. The six line segments are, however, not necessarily converted to satisfy a length ratio on the projection surface A1, and may be converted to have lengths corrected depending on the positions in the center plane.

A specific example of length correction is described. With $OP_1$ having a length of one in the projection surface A1, the lengths of the line segments $T_1$ to $T_6$ in the projection surface A1 take values in Table 1 below.

[Table 1]

|  | T1 | T2 | T3 | T4 | T5 | T6 |
|---|---|---|---|---|---|---|
| Length in projection surface A1 | 0.58 | 0.67 | 0.77 | 0.89 | 1.03 | 1.18 |
| Correction factor | 1 | 1.15 | 1.33 | 1.54 | 1.77 | 2.05 |
| Corrected length | 0.58 | 0.77 | 1.03 | 1.37 | 1.82 | 2.43 |
| Ratio to entire length of trunk line T | 0.07 | 0.10 | 0.13 | 0.17 | 0.23 | 0.30 |

The length of each line segment is corrected to the value obtained through multiplication by the correction factor. A correction factor $a_n$ for an n-th line segment $T_n$ is calculated by the following expression with the use of a correction factor $a_{n-1}$ for an (n - 1)-th line segment $T_{n-1}$ (that is, a line segment adjacent to the side opposite to the attention direction), the corresponding angle $\alpha$, and the exit angle $\beta$.

$$a_n = a_{n-1} \times \sin(\beta)/\sin(180° - \alpha - \beta)$$

Here, all the line segments have the corresponding angle $\alpha$ of 30° and the exit angle $\beta$ of 90°, and hence the following is satisfied.

$$a_n = a_{n-1}/\sin 60°$$

Further, no correction is required for the line segment $T_1$, and hence $a_1 = 1$ is satisfied. Thus, $a_2$ is calculated as follows, for example.

$$a_2 = 1/\sin 60°$$

Here, $a_2$ is approximately 1.15. Correction factors for the line segments $T_2$ to $T_6$ are calculated in order in a similar manner. In Table 1, the correction factors for the respective line segments calculated by this expression are indicated. The corrected length of each line segment takes a value obtained by multiplying the length in the projection surface A1 by this correction factor.

The length of each line segment in the image portion Ip1 is calculated to match this corrected length. Specifically, when the total value of the corrected lengths of the line segments $T_1$ to $T_6$ is denoted by Lt, the ratio of the length of each line segment in the image portion Ip1 to the entire length of the trunk line T is obtained by (corrected length)/Lt. The length of each line segment in the actual image portion Ip1 takes a value obtained by multiplying this ratio by the length of the diagonal of the image portion Ip1.

Such correction reduces a discontinuous change in length of the trunk line T per unit of angle. In the case where the shape of the trunk line T is represented by the single-valued function r = f(θ) in the polar coordinate system as described above, when θ is increased, the length of the trunk line T with respect to the unit of amount of the angle θ is changed discontinuously at a boundary between the line segments. Such a discontinuous change causes a discontinuous change in width of a region in the image portion Ip1 that corresponds to the unit of region on the virtual sphere S (that is, information density in the image), which is not preferred. In view of this, through correction with the correction factor $a_n$ as described above, such discontinuously can be prevented. Note that, a correspondence relation between the position of any point on each line segment of the projection surface A1, and a position in each line segment in the image portion Ip1 may be determined by interpolation such as linear interpolation.

The branch lines $F_1$ to $F_5$ in the projection surface A1 are each converted to a line segment parallel to a diagonal intersecting the diagonal corresponding to the trunk line T in the image portion Ip1. Specifically, the branch lines $F_1$ to $F_5$ are converted to pass through the respective relay points $P_2$ to $P_6$ in the image portion Ip1 as in the projection surface A1. Note that, the image portion Ip1 is a square here, and hence each of the branch lines F is orthogonal to the trunk line T.

In addition, the diagonal intersecting the diagonal corresponding to the trunk line T itself is also set as one of the branch lines F. This is the branch line $F_d$ described above. The position of the branch line $F_d$ in the projection surface A1 is set to a position corresponding to the position of the diagonal in the image portion Ip1.

With the correspondence relation between the trunk line T and each of the branch lines F determined in this way, the positions in the projection surface A1 are converted to the positions in the image portion Ip1. Specifically, a triangle surrounded by the branch line $F_1$ and the starting point $P_1$ and a triangle surrounded by the branch line $F_5$ and the end point $P_7$ in the projection surface A1 are converted to an upper-right triangle and a lower-left triangle in the image portion Ip1, respectively. Further, a trapezoid sandwiched by the adjacent two branch lines F of the branch lines $F_1$ to $F_5$ and $F_d$ is converted to a trapezoid sandwiched by the same two branch lines F in the image portion Ip1.

Note that, in conversion of a triangle to a triangle, positions at which the points inside the triangle are located after conversion are uniquely determined. In conversion of a rectangle to a rectangle, on the other hand, positions at which the points inside the rectangle are located after conversion are not uniquely determined. Thus, rectangles are converted as follows, for example. Specifically, first, positions in a direction parallel to the trunk line T are linearly interpolated. After that, positions in a direction intersecting the trunk line T (that is, a direction parallel to the branch lines F) are linearly interpolated. Through conversion described above, any point on the projection surface A1 can be associated with a position in the image portion Ip1.

Note that, the method of converting a rectangle is not limited to the one described above. For example, the trapezoid formed by the two branch lines F on the projection surface A1 may be divided into two triangles, and each triangle may be converted on the image portion Ip1. Alternatively, the triangles or the rectangles on the projection surface A1 may further be divided by executing tessellation processing, and conversion may be performed per unit of polygon that is obtained through division. With such a conversion method, errors that occur in conversion can be reduced to some extent. Further, such processing of converting a polygon to a polygon, such as tessellation, can be easily achieved with the use of a well-known computer graphics library, for example.

Through conversion described above, the scene in the 1/4 spherical surface S1 is converted to the image portion Ip1 having a planar shape. Scenes in the 1/4 spherical surfaces S2 to S4 are also projected on the projection surfaces A2 to A4 to be subjected to conversion in a similar manner, and image portions Ip2 to Ip4 are obtained. With the thus obtained four image portions Ip1 to Ip4 arranged, the planar panoramic image I including the whole-sky scene is generated.

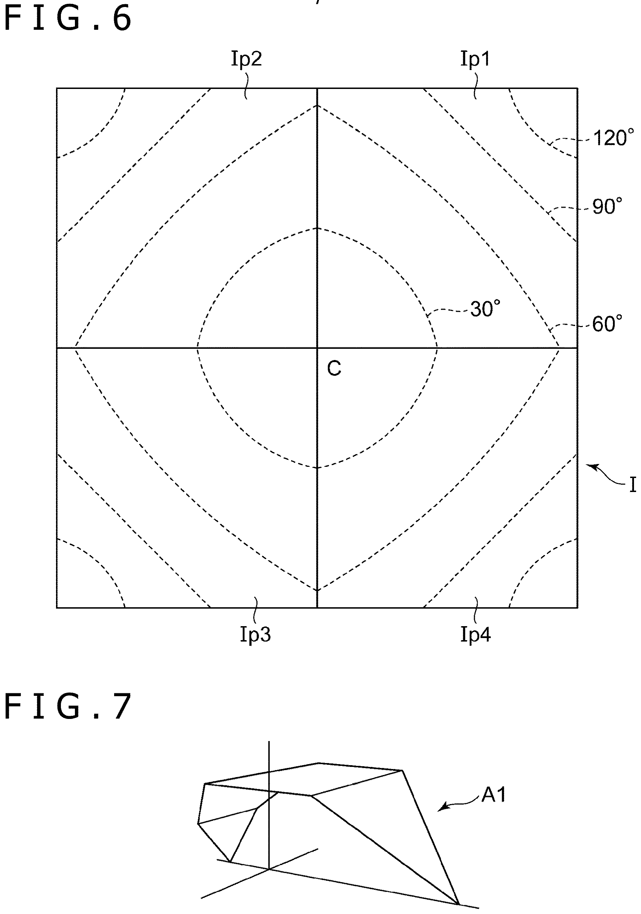

FIG. 6 illustrates an example of the panoramic image I that is obtained in this way. Each image portion is a square, and hence the panoramic image I also has a square shape as a whole. A center C of the panoramic image I corresponds to the attention direction (x-axis positive direction). FIG. 6 illustrates curves representing ranges with angles of 30°, 60°, 90°, and 120° from the attention direction. As illustrated in FIG. 6, a wider region is provided at a position closer to the attention direction in the panoramic image I. This means that the panoramic image I includes a larger amount of information at a position closer to the attention direction, and only includes a relatively small amount of information on the side opposite to the attention direction. When a scene image is drawn with the use of the panoramic image I, a portion of the image that is closer to the attention direction can be drawn at a higher resolution.

Note that, in the above description, the projection surface A1 includes the six polygons and the trunk line T accordingly includes the six line segments, but the present invention is not limited thereto. The trunk line T may include any number of line segments as long as the trunk line T includes three or more line segments. FIG. 7 illustrates the shape of the projection surface A1 in a case where the trunk line T includes four line segments, and the shape of the projection surface A1 is determined by a procedure similar to the one described above. When the trunk line T includes a smaller number of line segments in this way, a difference in information density is larger between the attention direction and the side opposite to the attention direction. Meanwhile, when the number of line segments of the trunk line T is increased, the shape of the trunk line T approaches a semicircle and the difference in information density between the attention direction and the opposite side is reduced.

Further, in the above description, the plurality of line segments of the trunk line T are determined such that the corresponding angles $\alpha$ are equal to each other. The corresponding angles $\alpha$ may, however, be different between the line segments.

Further, in the above description, the exit angle $\beta$ is 90°, but the present invention is not limited thereto. The exit angle $\beta$ may take any value larger than 90° and smaller than 180°. When the exit angle satisfies $90° \leq \beta < 180°$, the

function r = f(θ) that represents the shape of the trunk line T is a monotonically increasing function. Thus, the plurality of line segments of the trunk line T can be longer toward the attention direction in order. The exit angle β is, however, required to satisfy the relation of α + β < 180° with a next corresponding angle α. Note that, even when the corresponding angle α and the exit angle β of each line segment of the trunk line T take values different from those in the above description in this way, the correction factor $a_n$ described above can be calculated in order by a similar equation.

Further, part or the entire of the trunk line T may be a curve. Also in this case, with the shape of the trunk line T defined such that the function r = f(θ) is a monotonically increasing function, a region in the panoramic image I that corresponds to the unit of region on the virtual sphere S can be wider toward the attention direction.

Further, the shapes and placement of the branch lines F are not limited to the ones described above either. The branch line F may, for example, has a shape including a plurality of line segments in a plane that passes the corresponding relay point and is vertical to the attention direction. Alternatively, the branch line F may be a curve and has an arc shape, for example. In any case, the shape of the branch line F is determined such that the branch line F is symmetrical with respect to the center plane, and the angle formed by the branch line F with the point on the x axis (the angle formed by both ends of the branch line F and the center angle O) matches the corresponding 1/4 spherical surface (that is, the angle is 90°). Further, the branch line F may be placed in a plane that passes through the corresponding relay point and the center point O and is vertical to the center plane.

Further, in the above description, the attention direction is a direction parallel to the horizontal plane, but the present invention is not limited thereto. The attention direction may be set to any direction in the whole sky. Also in this case, with the attention direction being a reference, the placement positions of the projection surfaces A1 to A4 are determined such that the center plane is parallel to the attention direction. In this way, the panoramic image I including a larger amount of information at a position closer to the attention direction can be generated. Note that, the directions at which the virtual sphere S is divided into the 1/4 spherical surfaces may be set to any direction.

Further, in the above description, the panoramic image I entirely includes the whole-sky scene, but the panoramic image I of the present embodiment is not limited thereto. The panoramic image I may only include part of the range of the scene of the whole sky. For example, the panoramic image I may only include a scene corresponding to one of the 1/4 spherical surfaces S1 to S4, or a scene corresponding to two of the 1/4 spherical surfaces (namely, hemisphere).

In addition, the panoramic image I of the present embodiment may be generated by converting only a scene of part of the range of a certain 1/4 spherical surface to an image portion. In this case, a range in which no scene is projected may be regarded as a pixel including dummy information (for example, a pixel having a pixel value of zero) in the panoramic image I. With this, even in a case where information regarding a scene of part of a range, which includes a range at a high latitude near the nadir and other ranges, is not obtained, the panoramic image I can be generated by the method of the present embodiment. Further, each of the projection surfaces A1 to A4 corresponding to the 1/4 spherical surfaces may be converted to an image portion having a shape other than a square (for example, rectangular shape).

[Configuration and function of image display system]

Next, the configuration of an image display system 1 including an image generation apparatus 10 and an image display control apparatus 20 according to the embodiment of the present invention is described.

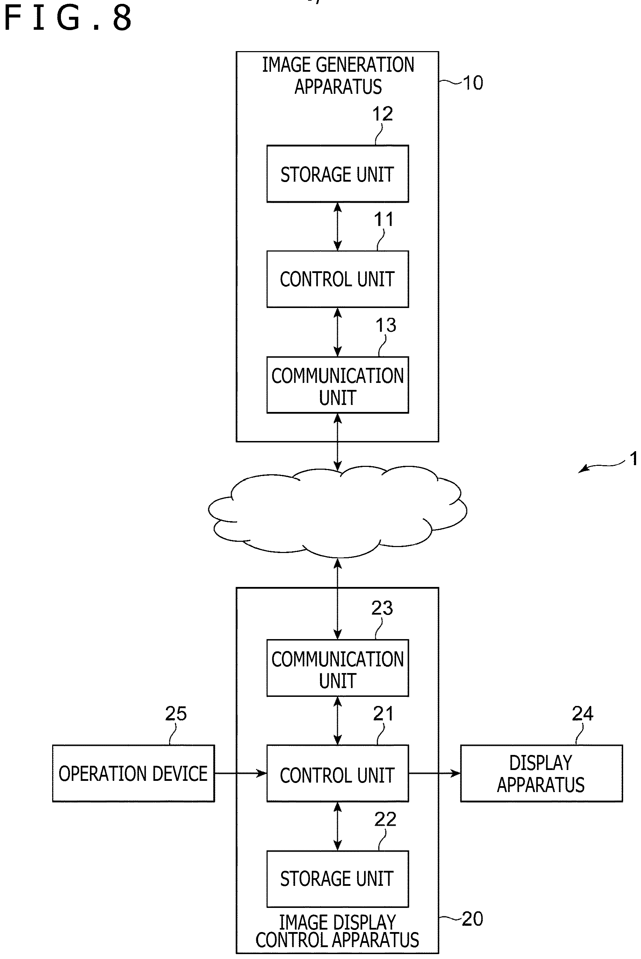

The image generation apparatus 10 is an information processing apparatus configured to generate the panoramic image I, and may be, for example, a home video game console, a handheld game console, a personal computer, a smartphone, or a tablet. As illustrated in FIG. 8, the image generation apparatus 10 includes a control unit 11, a storage unit 12, and a communication unit 13.

The control unit 11 includes at least one processor such as a central processing unit (CPU), and executes programs stored in the storage unit 12 to execute various information processes. In the present embodiment, in particular, the control unit 11 executes the processing of generating the panoramic image I. The storage unit 12 includes at least one memory device such as a random access memory (RAM), and stores the programs that the control unit 11 executes and data to be processed with the programs. The communication unit 13 is a communication interface such as a local area network (LAN) card, and transmits the data of the panoramic image I to the image display control apparatus 20 via a communication network.

The image display control apparatus 20 is an information processing apparatus configured to perform image display control based on the panoramic image I generated by the image generation apparatus 10, and may be, for example, a home video game console, a handheld game console, a personal computer, a smartphone, or a tablet, like the image generation apparatus 10. The image display control apparatus 20 includes a control unit 21, a storage unit 22, and a communication unit 23. In addition, the image display control apparatus 20 is connected to a display apparatus 24 and an operation device 25.

The control unit 21 includes at least one processor such as a CPU, and executes programs stored in the storage unit 22 to execute various information processes. In the present embodiment, in particular, the control unit 21 executes the processing of drawing a display image on the basis of the panoramic image I. The storage unit 22 includes at least one memory device such as a RAM, and stores the programs that the control unit 21 executes and data to be processed with the programs. The communication unit 23 is a communication interface such as a LAN card, and receives, via the communication network, data transmitted from the image generation apparatus 10.

The display apparatus 24 is, for example, a liquid crystal display, and displays images on the basis of video signals that the image display control apparatus 20 supplies. The display apparatus 24 may be a three-dimensional image display apparatus configured to display three-dimensionally viewable images that the image display control apparatus 20 supplies. Alternatively, the display apparatus 24 may be a head-mounted wearable display apparatus that the user can wear on his/her head, such as a head-mounted display.

The operation device 25 is, for example, a controller or a pointing device of a home video game console, and is used by the user to make various instruction operations to the image generation apparatus 10. The content of operation input that the user makes to the operation device 25 is transmitted to the image display control apparatus 20 with a cable or wirelessly. Note that, the operation device 25 may include, for example, operation buttons or a touch panel arranged on the casing surface of the image display control apparatus 20.

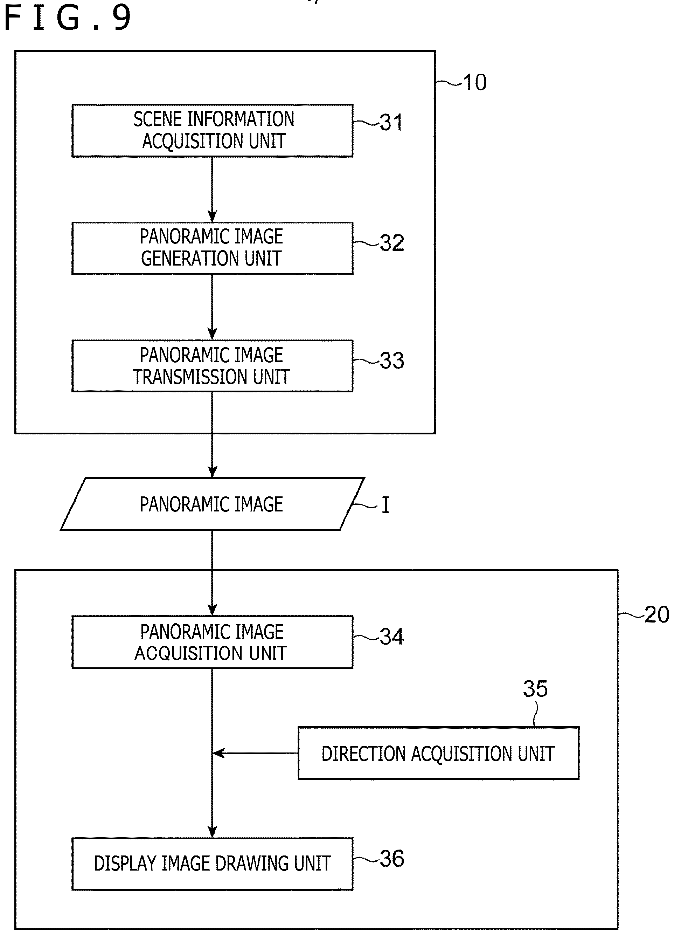

Next, functions that the image generation apparatus 10 and the image display control apparatus 20 achieve are described with reference to FIG. 9. As illustrated in FIG. 9, the image generation apparatus 10 functionally includes a scene information acquisition unit 31, a panoramic image generation unit 32, and a panoramic image transmission unit 33. These functions are achieved by the control unit 11 executing the programs stored in the storage unit 12. Further, the image display control apparatus 20 functionally includes a panoramic image acquisition unit 34, a direction acquisition unit 35, and a display image drawing unit 36. These functions are achieved by the control unit 21 executing the programs stored in the storage unit 22. The programs to be executed by each apparatus may be supplied to each apparatus via the communication network such as the Internet. Alternatively, the programs may be stored in a computer readable information storage medium such as an optical disc to be supplied to each apparatus.

The scene information acquisition unit 31 acquires scene information corresponding to original data for generating the panoramic image I. The scene information is information required for identifying a color per unit of region (pixel value) on the surface of the virtual sphere S when the whole-sky scene seen from the observation point is projected on the virtual sphere S. The scene information may be, for example, a panoramic image generated in an image format different from that in the present embodiment, such as equirectangular projection. Alternatively, the scene information may correspond to image data of a panoramic photograph taken by a panoramic camera. The scene information acquisition unit 31 may receive the scene information from another apparatus via the communication network or read the scene information from a device, for example, a camera connected to the image generation apparatus 10. Alternatively, the scene information acquisition unit 31 may read the scene information stored in an information storage medium such as a flash memory.

The panoramic image generation unit 32 generates the panoramic image I using the scene information that the scene information acquisition unit 31 has acquired. The panoramic image I corresponds to two-dimensional image data including the entire or part of the scene of the whole sky as described above. Specifically, the panoramic image generation unit 32 determines the attention direction and the positions and shapes of the projection surfaces A1 to A4 under given conditions. Then, the panoramic image generation unit 32 calculates, on the basis of the scene information, the pixel value of each pixel in the panoramic image I according to the correspondence relation between the positions in the projection surfaces and the positions in the panoramic image I described above, to thereby generate the panoramic image I.

Note that, the correspondence relation between the positions in the projection surfaces and the positions in the panoramic image I is determined from the positions and shapes of the projection surfaces. Further, as described so far, the positions and shapes of the projection surfaces are defined on the basis of which direction the attention direction is and the positions and shapes of the trunk line T and the branch lines F. Information that defines the positions and shapes of the projection surfaces is required for the image display control apparatus 20 to reproduce a scene included in the panoramic image I using the panoramic image I. Thus, the panoramic image generation unit 32 outputs such information that defines the configuration of the panoramic image I (hereinafter referred to as "image definition information") in association with the generated panoramic image I.

Further, the panoramic image generation unit 32 may generate three-dimensional view panoramic image data. The image data generated in this case may be, for example, rectangular image data with an aspect ratio of 1:2 that includes a square panoramic image I for generating an image for a left eye on the left half and a square panoramic image I for generating an image for a right eye on the right half. Further, the panoramic image generation unit 32 may generate the panoramic image I as a moving image that changes over time.

The panoramic image transmission unit 33 transmits the panoramic image I generated by the panoramic image generation unit 32 to the image display control apparatus 20. Here, the panoramic image transmission unit 33 transmits the image definition information together with the panoramic image I.

The panoramic image acquisition unit 34 receives the panoramic image I that is transmitted from the panoramic image transmission unit 33 of the image generation apparatus 10, to thereby acquire the panoramic image I. Here, the panoramic image acquisition unit 34 directly receives, via the communication network, the panoramic image I that is transmitted from the image generation apparatus 10. The present invention is, however, not limited to this configuration, and the panoramic image acquisition unit 34 may receive the panoramic image I via another apparatus such as a server computer.

The direction acquisition unit 35 acquires direction information that is used for determining a field of view range (display range) of the display image to be displayed on the display apparatus 24, on the basis of user instructions, for example. The direction information that the direction acquisition unit 35 acquires is used as the imaging direction of a virtual camera when the display image drawing unit 36, which is described later, generates the display image. This imaging direction is defined by, for example, a yaw angle representing an angle in the horizontal direction and a pitch angle representing an angle in the up and down direction. In addition, the direction acquisition unit 35 may acquire a roll angle representing an angle of rotation of the camera with the imaging direction being a rotation axis.

Specifically, for example, the direction acquisition unit 35 receives operation input for instructing a direction made by the user to the operation device 25, to thereby acquire the direction information. Alternatively, the direction acquisition unit 35 may acquire the direction information from a detection result by a motion sensor built in the image display control apparatus 20 when the user tilts the body of the image display control apparatus 20. With this, for example, in a case where the image display control apparatus 20 is an apparatus with a small casing, such as a smartphone or a tablet, the user can change the field of view range to any direction by changing the direction of the image display control apparatus 20. Further, in a case where the display apparatus 24 is a head-mounted wearable display apparatus, the direction acquisition unit 35 may acquire the direction information from a detection result by a motion sensor built in the display apparatus 24. With this, the field of view range can be changed depending on a change in direction of the head of the user.

The display image drawing unit 36 draws, on the basis of the panoramic image I acquired by the panoramic image acquisition unit 34, a display image representing a scene in a field of view range that is determined depending on the direction information acquired by the direction acquisition unit 35, and causes the display apparatus 24 to display the display image. With this, the user can view a scene in a specific field of view range included in the panoramic image I. In addition, the user can view a scene in any direction in the whole sky by changing the field of view range by, for example, making operation input to the operation device 25.

Specifically, the display image drawing unit 36 places the projection surfaces A1 to A4 in the virtual space on the basis of the image definition information transmitted together with the panoramic image I. In addition, the display image drawing unit 36 places the virtual camera at its center position (a position corresponding to the center point O of the virtual sphere S). Here, the virtual camera is placed with a direction and a tilt that are determined depending on the direction information that the direction acquisition unit 35 has acquired.

Subsequently, the display image drawing unit 36 applies a texture that is generated on the basis of the panoramic image I to the inner sides of the projection surfaces A1 to A4. A specific example is described. In a case where the draw processing is performed with the use of the panoramic image I exemplified in FIG. 6, the display image drawing unit 36 places the projection surface A1 as exemplified in FIG. 2 in the virtual space. Further, the projection surfaces A2 to A4 having the same shape as the projection surface A1 has are placed while being rotated by 90°. Then, an image included in the image portion Ip1 exemplified in FIG. 5 is applied to the inner side of the projection surface A1 as the texture. Specifically, the display image drawing unit 36 divides the image portion Ip1 into five trapezoids and two triangles by the branch lines $F_1$ to $F_5$ and $F_d$. Then, the display image drawing unit 36 converts the polygons obtained through division, such as the triangles and the trapezoids, to shapes depending on the corresponding planes in the projection surface A1 through affine transformation in a direction opposite to that in image generation. Thereafter, the display image drawing unit 36 applies a texture obtained through conversion to the inner side of the projection surface A1. For example, an upper-right triangle formed by the starting point $P_1$ and the branch line $F_1$ in the image portion Ip1 is applied to a triangle portion having the starting point $P_1$ as a vertex in the projection surface A1. In a similar manner, a trapezoid sandwiched by the branch line $F_1$ and the branch line $F_2$ in the image portion Ip1 is converted to a trapezoid sandwiched by the branch line $F_1$ and the branch line $F_2$ in the projection surface A1. In this way, all the polygons such as the triangles and the trapezoids in the panoramic image I are converted to the shapes depending on the corresponding projection surfaces A1 to A4 to be applied thereto. Such processing can be achieved by, for example, the vertex shader, which is well known. Further, the display image drawing unit 36 may execute the tessellation processing to divide the trapezoid into a plurality of small polygons, and perform conversion for each polygon obtained through division as described above. A graphics processing unit (GPU) may achieve at least part of such draw processing, for example.

After that, the display image drawing unit 36 draws how the projection surfaces A1 to A4 to which this texture has been applied are seen from the virtual camera placed at the position corresponding to the center point O of the virtual sphere S, to thereby generate the display image. In a case where the virtual camera is directed to the attention direction, for example, a display image including a region in the vicinity of the end point $P_7$ of the projection surface A1 and regions adjacent thereto of the projection surfaces A2 to A4 is drawn.

Here, as described above, the panoramic image I is in the image format having a larger area in the region in the vicinity of the attention direction. When the display image is generated on the basis of such panoramic image I, there can be generated a display image representing a scene at a higher resolution in the vicinity of the attention direction than that in other regions.

In addition, in the present embodiment, the display image drawing unit 36 updates the display image in real time depending on a change in direction that the direction acquisition unit 35 acquires. Specifically, the display image drawing unit 36 changes, when a direction that the direction acquisition unit 35 acquires is changed, the direction of the virtual camera to a direction corresponding to the direction after change. More specifically, the display image drawing unit 36 changes, when the pitch angle and the yaw angle are changed, the imaging direction of the virtual camera on the basis of the changes. Further, the display image drawing unit 36 tilts, when the roll angle is changed, the virtual camera with the imaging direction being a rotation axis on the basis of the change. With this, the field of view range of the virtual camera is changed on the basis of a change in direction that the direction acquisition unit 35 acquires. The display image drawing unit 36 redraws the state of the inner sides of the projection surfaces A1 to A4 on the basis of the updated field of view range to update the display image, and displays the display image on the screen of the display apparatus 24. Every predetermined period of time, the display image drawing unit 36 repeatedly executes such display image redrawing (updating) processing depending on a change in direction that the direction acquisition unit 35 acquires. With such control, the user can view a scene at any position in the whole sky included in the panoramic image I by moving the field of view range.

Further, the direction acquisition unit 35 may acquire information regarding the position of the virtual camera in addition to the direction of the virtual camera, on the basis of instructions from the user, for example. In this case, the display image drawing unit 36 translates the virtual camera in the virtual space on the basis of a change in position information. With this, how the scenes applied to the projection surfaces A1 to A4 are seen when the scenes are seen from different positions can be displayed.

Note that, in the above description, the display image is one planar image, but the display image drawing unit 36 may draw a three-dimensional image. In this case, the display image drawing unit 36 places, at the center of the projection surfaces A1 to A4, two virtual cameras adjacent to each other in the left and right direction. The display image drawing unit 36 draws how the inner surfaces of the projection surfaces A1 to A4 to which a texture generated on the basis of the panoramic image I for a left eye has been applied are seen from the left virtual camera, to thereby generate a display image for a left eye. In a similar manner, the display image drawing unit 36 draws how the inner surfaces of the projection surfaces A1 to A4 to which a texture generated on the basis of the panoramic image I for a right eye has been applied are seen from the right virtual camera, to thereby generate a display image for a right eye. The display image drawing unit 36 causes the display apparatus 24, which supports three-dimensional display, to display these two display images, to thereby allow the user to view a three-dimensional whole-sky scene.

As described above, in the present embodiment, the panoramic image I is generated in the image format that includes a larger amount of information per unit of region of the virtual sphere S corresponding to the whole sky in a region closer to the attention direction. Thus, while an important portion can be displayed at high resolution, the entire data amount of the panoramic image I can be relatively reduced.

Note that, in the above description, the image generation apparatus 10 transmits the panoramic image I to the image display control apparatus 20 via the communication network, but the present invention is not limited thereto. The image generation apparatus 10 may write the panoramic image I into an information storage medium such as a flash memory, and the image display control apparatus 20 may read and acquire the panoramic image I from such an information storage medium. Further, for example, in the above description, the image generation apparatus 10 and the image display control apparatus 20 are apparatus independent of each other, but one information processing apparatus may achieve both generation and display control of the panoramic image I.

[Switching delivery of plurality of images]

In the above description, the image generation apparatus 10 transmits one panoramic image I to the image display control apparatus 20, and the image display control apparatus 20 draws the display image on the basis of the panoramic image I. In a case where the display object is a panoramic moving image Im that changes over time, however, the image generation apparatus 10 may prepare the plurality of kinds of panoramic moving images Im, and perform switching to select, from the panoramic moving images Im, a moving image that the image generation apparatus 10 delivers to the image display control apparatus 20 in real time. With this, the panoramic moving image Im that is the display object is changed while the user is viewing the display image. Such control is described below.

In this example, the entire or part of the region of the whole sky is a displayable range, and the image generation apparatus 10 generates the plurality of panoramic moving images Im including scenes in this displayable range. Then, the image generation apparatus 10 selects one of the panoramic moving images Im as a delivery target, and performs streaming delivery of transmitting a moving image in real time while the user of the image display control apparatus 20 is viewing the display image.

The panoramic moving images Im are generated on the basis of common scene information, but have attention directions different from each other. For example, the image generation apparatus 10 generates six panoramic moving images Im using, as the attention directions, six directions including the four directions of front, back, left, and right that are shifted from each other by 90° in the horizontal plane, the zenith direction, and the nadir direction. The panoramic moving images Im are the same in resolution of the frame images of the moving image, and are different from each other in region including a large amount of information in one frame image. For example, the panoramic moving image Im having the front as the attention direction includes information displayable at high resolution in a direction defined as the front, and includes information displayable at only relatively low resolution in the back that is opposite to the front. Further, all the panoramic moving images Im are the same in displayable range itself and content of the image itself but different in high resolution region.

The direction acquisition unit 35 of the image display control apparatus 20 acquires information indicating a direction that the user viewing the display image is watching, and transmits the acquired watching direction information to the image generation apparatus 10. The image generation apparatus 10 selects the panoramic moving image Im that is the delivery target using this watching direction information. A specific example is described. The panoramic moving image Im generated with the attention direction being the front is delivered in a case where the user is watching the direction defined as the front, and the panoramic moving image Im generated with the attention direction being the zenith direction is delivered in a case where the user is watching the zenith direction.

Note that, the direction acquisition unit 35 of the image display control apparatus 20 may transmit information regarding a watching direction at a time point every predetermined period of time. Alternatively, the direction acquisition unit 35 may transmit, at a timing at which the watching direction is changed by a predetermined value or larger or a timing at which the watching direction is moved from a certain range to another range, information regarding the watching direction after change.

Further, when receiving information for notifying a change in watching direction from the image display control apparatus 20, the panoramic image transmission unit 33 of the image generation apparatus 10 may immediately switch the panoramic moving image Im that is the delivery target, or switch the panoramic moving image Im after a predetermined timing arrives. Specifically, for example, the panoramic image transmission unit 33 may switch the panoramic moving image Im that is the delivery target to another one at a timing of transmitting the first frame image of group of pictures (GOP).

With such control, the image display control apparatus 20 can display a scene in a direction that the user is watching at high resolution. Further, the data amount of a moving image to be delivered can be reduced as compared to a case of delivering a panoramic moving image including information required for displaying an entire displayable range at high resolution.

In addition, in this example, when streaming is being executed, only one of the panoramic moving images Im is delivered at one time. All the panoramic moving images Im, however, include information regarding the entire displayable range, and hence even in a case where the user greatly changes the watching direction suddenly, for example, a situation that nothing can be displayed until the switched-to panoramic moving image Im is delivered does not occur. A scene in the watching direction after change can be continuously displayed at a resolution lower than that in the attention direction.

Further, the image generation apparatus 10 may prepare the plurality of kinds of panoramic moving images Im having different data sizes, and switch the panoramic moving image Im that is the delivery target depending on the conditions of the communication network between the image generation apparatus 10 and the image display control apparatus 20. For example, the image generation apparatus 10 may prepare, as the delivery targets, one first panoramic moving image Im1 having an entire displayable range as a range displayable at a resolution of a predetermined reference or higher, n second panoramic moving images Im2 each having a certain range with the attention direction being the center as the range displayable at the resolution of the predetermined reference or higher, and m third panoramic moving images Im3 each having, as the range displayable at the resolution of the predetermined reference or higher, a range that has the attention direction as the center and is narrower than that of the second panoramic moving image Im2. Here, $n < m$ is satisfied.

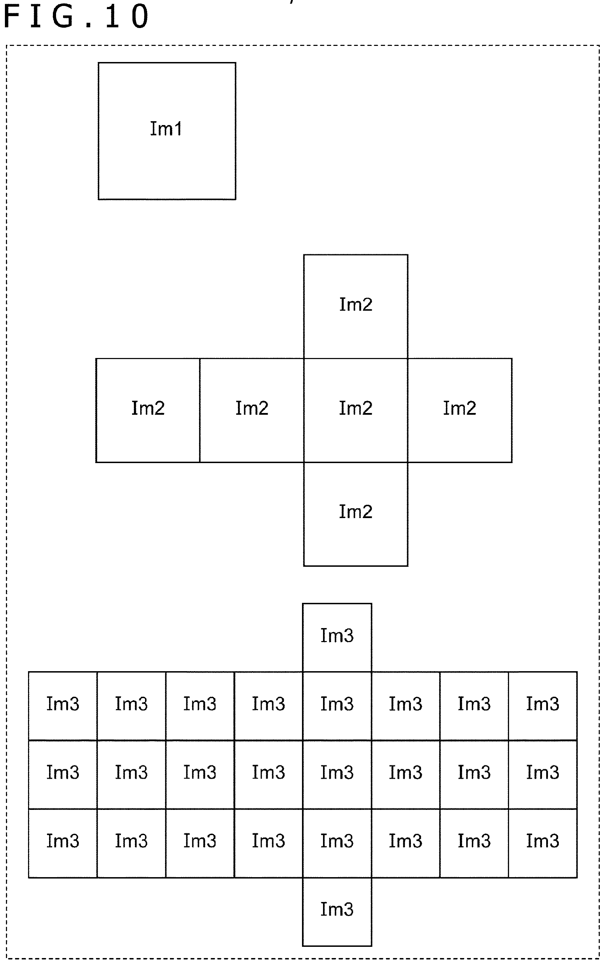

FIG. 10 illustrates the panoramic moving images Im that are the delivery targets, and the size of each of the panoramic moving images Im represents a difference between the data sizes of the moving images. Further, here, the six second panoramic moving images Im2 and the 26 third panoramic moving images Im3 are prepared.

In the example of FIG. 10, the first panoramic moving image Im1 corresponds to data in a format different from the image format described so far, and includes the uniform amount of information from the attention direction to the side opposite thereto, that is, includes information required for high-resolution display of regions in all the directions. In return for this, the first panoramic moving image Im1 has a data size larger than those of the second panoramic moving image Im2 and the third panoramic moving image Im3. If a bandwidth enough to deliver the first panoramic moving image Im1 can be provided between the image generation apparatus 10 and the image display control apparatus 20, the first panoramic moving image Im1 may be used as the delivery target. With this, the image display control apparatus 20 can draw the display image to be displayed at high resolution in any direction that the user is watching.

In contrast to this, the second panoramic moving images Im2 may be moving image data having, as frame images, the panoramic images Im that are generated with the use of the projection surfaces including the six polygons as exemplified in FIG. 2, for example. Specifically, the second panoramic moving images Im2 may be data each having, as the range displayable at the resolution of the predetermined reference or higher, a range that has the attention direction as the center and a three-dimensional angle $(4\pi/6)$ or larger. Alternatively, the six second panoramic moving images Im2 may be, for example, moving images having the six directions of the front, the back, the left, the right, the zenith, and the nadir as the attention directions.

The six second panoramic moving images Im2 are the data different from each other in ranges displayable at high resolution. With the use of the six second panoramic moving images Im2, the entire of the whole sky can be displayed at high resolution. Further, the second panoramic moving image Im2 includes a relatively small amount of information in ranges other than the range with the attention direction being the center, and thus has a data size smaller than that of the first panoramic moving image Im1. When the bandwidth enough to deliver the first panoramic moving image Im1 cannot be provided, one of the six second panoramic moving images Im2 is accordingly used as the delivery target, so that the bandwidth usage of the communication network can be reduced. Besides, the delivery target is selected from the six second panoramic moving images Im2 having attention directions different from each other depending on the watching direction of the user as described above, and hence, although the data size is small, the moving image can be displayed in the vicinity of the attention direction at a resolution as high as that of the first panoramic moving image Im1.

In a similar manner, the third panoramic moving image Im3 has, as the region displayable at the resolution of the predetermined reference or higher, the region narrower than that of the second panoramic moving image Im2, and the third panoramic moving image Im3 has a data size smaller than that of the second panoramic moving image Im2 in return for this. For example, with the frame image being the panoramic image Im generated with the use of the projection surface including the four polygons as exemplified in FIG. 7, the third panoramic moving image Im3 having, as the region displayable at the resolution of the predetermined reference or higher, the region narrower than that of the second panoramic moving image Im2 can be generated. Further, because the region displayable at the resolution of the predetermined reference or higher is narrow, the third panoramic moving images Im3 are prepared more than the second panoramic moving images Im2, so that the third panoramic moving images Im3 can cover the entire of the displayable range (here, whole sky). Specifically, in the example of FIG. 10, there are prepared the 26 third panoramic moving images Im3 having, as the attention directions, a total of 26 directions: eight directions different from each other by 45° on the horizontal plane, eight directions different from each other by an angle of elevation of 45°, eight directions different from each other by an angle of depression of 45°, the zenith direction, and the nadir direction.

In a case where a communication bandwidth enough to deliver the second panoramic moving images Im2 cannot be provided, the image generation apparatus 10 uses one of the third panoramic moving images Im3 that is selected depending on the watching direction as the delivery target. With this, even when an enough communication bandwidth cannot be not provided, the image display control apparatus 20 can display the moving image at a resolution substantially as high as that of the first panoramic moving image Im1 and other images as long as the watching direction remains in the vicinity of the attention direction. Note that, the third panoramic moving image Im3 has the relatively narrow region as the region displayable at the resolution of the predetermined reference or higher, and hence when the user greatly changes the watching direction, the watching direction is often deviated from the region. Even in such a case, because the third panoramic moving images Im3 including the entire displayable range are delivered, a low-resolution moving image can be at least displayed continuously.

As described above, the image generation apparatus 10 prepares the plurality of panoramic moving images Im having attention directions different from each other as the delivery targets, and switches the delivery target depending on the watching direction of the user, thereby being capable of displaying, even when the watching direction is changed, a moving image in the vicinity of the direction at high resolution while reducing the data amount of entire delivery. Further, the image generation apparatus 10 prepares the plurality of kinds of panoramic moving images Im different from each other in position and size of the region displayable at the resolution of the predetermined reference or higher, and performs switching depending on the communication bandwidth and the watching direction, thereby being capable of displaying a region based on the watching direction as a moving image at the resolution of the predetermined reference or higher while effectively utilizing the communication bandwidth.

Note that, in the above description, the delivery target is the panoramic moving image Im having the whole sky as the displayable range, but the present invention is not limited thereto. The displayable range may be, for example, a range corresponding to part of the whole sky such as a hemispherical surface. Even in such a case, while the amount of the communication bandwidth is reduced, any position in the displayable range can be displayed and a region in the vicinity of the watching direction can be displayed at high resolution by the delivery method described above.

Alternatively, the image generation apparatus 10 may has, as the delivery target, a moving image other than the panoramic moving image Im (for example, a moving image having normal planar images as frame images). Also in this case, for example, the watching direction of the user can be specified by a method that specifies the line of sight direction of the user through eye tracking, which is well known. In this case, there are generated a plurality of delivery target moving images each having a region drawn at a resolution higher than that of other regions in the moving image. These delivery target moving images are different from each other in regions displayable at resolution higher than that of other regions. With this, similar to the panoramic moving images Im, while a region in the vicinity of the watching direction is displayed at high resolution, a communication bandwidth to be used can be reduced as compared to a case where a moving image entirely drawn at high resolution is delivered.

Further, in the above description, the image generation apparatus 10 configured to generate the moving image that is the delivery target delivers the generated moving image and performs delivery target moving image switching by itself, but the present invention is not limited thereto. Another image delivery apparatus different from the image generation apparatus may execute such delivery processing.

[Reference Signs List]

1 Image display system, 10 Image generation apparatus, 11, 21 Control unit, 12, 22 Storage unit, 13, 23 Communication unit, 20 Image display control apparatus, 24 Display apparatus, 25 Operation device, 31 Scene information acquisition unit, 32 Panoramic image generation unit, 33 Panoramic image transmission unit, 34 Panoramic image acquisition unit, 35 Direction acquisition unit, 36 Display image drawing unit

**Claims**

1. An image delivery apparatus configured to deliver a moving image that is a display object to an image display control apparatus configured to display a moving image to present the moving image to a user, the image delivery apparatus comprising:

   a delivery unit configured to deliver, to the image display control apparatus at one time, any one of a plurality of moving images different from each other in portion displayable at high resolution in a displayable range; and
   a watching direction acquisition unit configured to acquire information regarding a watching direction of the user in the displayable range,
   wherein the delivery unit selects a moving image of the plurality of moving images as a delivery target based on the information regarding the watching direction.

2. The image delivery apparatus according to claim 1, wherein the delivery unit delivers, to the image display control apparatus at one time, any one of the plurality of moving images including a plurality of first moving images different from each other in positions of portions displayable at a resolution of a predetermined reference or higher in the displayable range, and a plurality of second moving images narrower in portion displayable at the resolution of the predetermined reference or higher than the plurality of first moving images.

3. The image delivery apparatus according to claim 2,
   wherein the portion of each of the plurality of first moving images is determined such that any position in the displayable range is displayable at the resolution of the predetermined reference or higher by any of the plurality of first moving images, and
   the portion of each of the plurality of second moving images is determined such that any position in the displayable range is displayable at the resolution of the predetermined reference or higher by any of the plurality of second moving images.

4. The image delivery apparatus according to claim 2 or 3, further comprising:

   a bandwidth information acquisition unit configured to acquire information regarding a communication bandwidth between the image delivery apparatus and the image display control apparatus,
   wherein the delivery unit selects the moving image that is the delivery target based on the information regarding the watching direction and the information regarding the communication bandwidth.

5. The image delivery apparatus according to any one of claims 1 to 4, wherein the moving image includes a panoramic moving image having part or an entire of a range of whole sky as the displayable range, and the display object that the image display control apparatus displays includes a field of view range corresponding to part of the displayable range.

6. An image delivery method for delivering a moving image that is a display object to an image display control apparatus configured to display a moving image to present the moving image to a user, the image delivery method comprising:

   a delivery step of delivering, to the image display control apparatus at one time, any one of a plurality of moving images different from each other in portion displayable at high resolution in a displayable range; and
   a watching direction acquisition step of acquiring information regarding a watching direction of the user in the displayable range, wherein in the delivery step, a moving image of the plurality of moving images is selected as a delivery target based on the information regarding the watching direction.

7. A program for controlling an image delivery apparatus configured to deliver a moving image that is a display object to an image display control apparatus configured to display a moving image to present the moving image to a user, the program controlling the image delivery apparatus to function as:

   a delivery unit and the delivery unit configured to deliver, to the image display control apparatus at one time, any one of a plurality of moving images different from each other in portion displayable at high resolution in a displayable range; and
   a watching direction acquisition unit configured to acquire information regarding a watching direction of the user in the displayable range,
   wherein the delivery unit selects a moving image of the plurality of moving images as a delivery target based on the information regarding the watching direction.

# FIG.1

# FIG.2

FIG.3

FIG.4

# FIG.5

# FIG.6

Ip2                    Ip1

120°

90°

30°          60°

C

I

Ip3          Ip4

# FIG.7

A1

# FIG.8

```
IMAGE GENERATION
    APPARATUS          ⌒10

              12
    ┌─────────────────┐
    │  STORAGE UNIT   │
    └─────────────────┘
            ↕
              11
    ┌─────────────────┐
    │  CONTROL UNIT   │
    └─────────────────┘
            ↕
              13
    ┌─────────────────┐
    │  COMMUNICATION  │
    │      UNIT       │
    └─────────────────┘
```

⌒1

```
              23
    ┌─────────────────┐
    │  COMMUNICATION  │
    │      UNIT       │
    └─────────────────┘
            ↕
              21
  25                                    24
┌──────────────┐   ┌─────────────────┐   ┌─────────────┐
│  OPERATION   │→  │  CONTROL UNIT   │→  │   DISPLAY   │
│    DEVICE    │   └─────────────────┘   │  APPARATUS  │
└──────────────┘          ↕              └─────────────┘
              22
    ┌─────────────────┐
    │  STORAGE UNIT   │
    └─────────────────┘

    IMAGE DISPLAY        ⌒20
  CONTROL APPARATUS
```

# F I G . 9

```
┌─────────────────────────────────────────────┐ ～10
│  ┌─────────────────────────────┐             │
│  │  SCENE INFORMATION          │～31          │
│  │  ACQUISITION UNIT           │             │
│  └─────────────────────────────┘             │
│                 │                            │
│                 ▼                            │
│  ┌─────────────────────────────┐             │
│  │  PANORAMIC IMAGE            │～32          │
│  │  GENERATION UNIT           │             │
│  └─────────────────────────────┘             │
│                 │                            │
│                 ▼                            │
│  ┌─────────────────────────────┐             │
│  │  PANORAMIC IMAGE           │～33          │
│  │  TRANSMISSION UNIT         │             │
│  └─────────────────────────────┘             │
└─────────────────────────────────────────────┘
                  │
                  ▼
        ╱───────────────────────╱
       ╱  PANORAMIC IMAGE      ╱～I
      ╱───────────────────────╱
                  │
                  ▼
┌─────────────────────────────────────────────┐ ～20
│  ┌─────────────────────────────┐             │
│  │  PANORAMIC IMAGE           │～34          │
│  │  ACQUISITION UNIT          │             │
│  └─────────────────────────────┘        35   │
│                 │         ┌──────────────────┐│
│                 │◄────────│ DIRECTION        ││
│                 │         │ ACQUISITION UNIT ││
│                 ▼         └──────────────────┘│
│  ┌─────────────────────────────┐             │
│  │  DISPLAY IMAGE DRAWING UNIT │～36          │
│  └─────────────────────────────┘             │
└─────────────────────────────────────────────┘
```

# FIG.10

| | |
|---|---|
| Im1 | |

| | | Im2 | |
|---|---|---|---|
| Im2 | Im2 | Im2 | Im2 |
| | | Im2 | |

| | | | | Im3 | | | |
|---|---|---|---|---|---|---|---|
| Im3 | Im3 | Im3 | Im3 | Im3 | Im3 | Im3 | Im3 |
| Im3 | Im3 | Im3 | Im3 | Im3 | Im3 | Im3 | Im3 |
| Im3 | Im3 | Im3 | Im3 | Im3 | Im3 | Im3 | Im3 |
| | | | | Im3 | | | |

**INTERNATIONAL SEARCH REPORT**

| International application No. |
| --- |
| PCT/JP2017/001753 |

| A. CLASSIFICATION OF SUBJECT MATTER |
| --- |
| *H04N21/2662*(2011.01)i, *G06F13/00*(2006.01)i, *H04N21/4728*(2011.01)i |

According to International Patent Classification (IPC) or to both national classification and IPC

| B. FIELDS SEARCHED |
| --- |
| Minimum documentation searched (classification system followed by classification symbols)<br>H04N21/2662, G06F13/00, H04N21/4728 |

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | WO 2016/140083 A1 (Sony Corp.),<br>09 September 2016 (09.09.2016),<br>entire text<br>(Family: none) | 1–7 |
| A | JP 2016-167699 A (Nippon Telegraph and Telephone Corp.),<br>15 September 2016 (15.09.2016),<br>entire text<br>(Family: none) | 1–7 |
| A | JP 2012-95229 A (Sharp Corp.),<br>17 May 2012 (17.05.2012),<br>entire text<br>(Family: none) | 1–7 |

| ☒ Further documents are listed in the continuation of Box C. | ☐ See patent family annex. |
| --- | --- |

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 April 2017 (13.04.17) | Date of mailing of the international search report<br>25 April 2017 (25.04.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2017/001753 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-56335 A (Sony Corp.),<br>19 February 2004 (19.02.2004),<br>entire text<br>(Family: none) | 1-7 |
| A | WO 2016/199608 A1 (Sony Corp.),<br>15 December 2016 (15.12.2016),<br>entire text<br>(Family: none) | 1-7 |

Form PCT/ISA/210 (continuation of second sheet) (January 2015)